(19) Europäisches Patentamt
European Patent Office
Office européen des brevets

(11) **EP 3 029 797 B1**

(12) **EUROPEAN PATENT SPECIFICATION**

(45) Date of publication and mention
of the grant of the patent:
**03.08.2022 Bulletin 2022/31**

(21) Application number: **14196363.7**

(22) Date of filing: **04.12.2014**

(51) International Patent Classification (IPC):
*H02J 3/38* (2006.01)     *H02J 7/35* (2006.01)
*H02J 7/32* (2006.01)

(52) Cooperative Patent Classification (CPC):
**G06Q 50/06; H02J 3/381; H02J 7/32; H02J 7/35;**
H02J 2300/26; H02J 2310/12; Y02B 10/10;
Y02E 10/56; Y02E 10/76

(54) **Apparatus for the conversion and optimized consumption management of power from renewable sources**

Vorrichtung zur Umwandlung und optimierten Verbrauchsverwaltung von Strom aus erneuerbaren Energie

Appareil pour la conversion et la gestion de consommation optimisée de puissance à partir de sources renouvelables

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.06.2016 Bulletin 2016/23**

(73) Proprietor: **MARICI Holdings The Netherlands B.V.
3068AX Rotterdam (NL)**

(72) Inventors:
• **Becattini, Andrea
52022 CAVRIGLIA (IT)**
• **Fiesoli, Guido
50012 BAGNO A RIPOLI (IT)**
• **Macerini, Sauro
52021 BUCINE (IT)**

(74) Representative: **Savi, Massimiliano et al
Notarbartolo & Gervasi S.p.A.
Viale Achille Papa, 30
20149 Milano (IT)**

(56) References cited:
**WO-A1-2013/128422     US-A1- 2011 175 565
US-A1- 2014 117 756**

• **Sma: "SMA SMART HOME The System Solution for More Independence - Planning Guidelines", , 20 November 2014 (2014-11-20), XP055178580, Retrieved from the Internet: URL:http://files.sma.de/dl/1353/SI-HoMan-P L-en-32.pdf [retrieved on 2015-03-23]**
• **LI JIAHAO ET AL: "Optimal charge control strategies for stationary photovoltaic battery systems", JOURNAL OF POWER SOURCES, vol. 258, 25 February 2014 (2014-02-25), pages 365-373, XP028604652, ISSN: 0378-7753, DOI: 10.1016/J.JPOWSOUR.2014.02.066**
• **27TH EUROPEAN PHOTOVOLTAIC SOLAR ENERGY CONFERENCE, PROCEEDINGS OF THE 27TH INTERNATIONAL CONFERENCE, WIP-RENEWABLE ENERGIES, SYLVENSTEINSTR. 2 81369 MUNICH, GERMANY, 31 October 2012 (2012-10-31), XP040634648, ISBN: 978-3-936338-28-7**

**Description**

FIELD OF THE INVENTION

The present invention relates to systems for the conversion of power, in particular, but not exclusively, the present invention relates to systems for converting power produced by photovoltaic panel systems and adapted to be connected directly to the power grid.

BACKGROUND ART

In the technical field of power conversion and, in particular, in the technical field of systems for the conversion of power produced by photovoltaic panel and wind systems, adapted to be connected directly to the power grid, managing the power consumption, in the household environment and not only, in the presence of power generation systems from renewable sources, is increasingly important.

Systems of this type comprise a generator of power from alternative sources, such as photovoltaic panels, associated with an inverter apparatus in turn connected to the alternating voltage power grid and possibly to a group of storage batteries, adapted to operate, also in the presence of said grid AC voltage, to optimize the transfer of power to and from the grid.

Said inverter apparatus, for example comprising a double conversion stage consisting of a first DC-DC converter and a second DC-AC converter, is adapted to convert the power from the alternative source (the photovoltaic panel, the wind turbine etc.) into alternating power for the supply to the primary power grid (e.g. ENEL grid).

In the case of renewable sources including, in particular, photovoltaic generators, the power conversion systems of the type described have to manage the production of power by the photovoltaic generator and the supply of said power to the primary power grid.

In addition to this, systems of this type must manage the rules that the power distribution provider normally imposes on the supply of power produced locally in the grid, rules which are becoming increasingly stringent and burdensome for the users. These rules ensure that the ideal situation for a household installation is the one in which said household installation is as independent from the power grid as possible, both as regards the use of energy - self-produced energy is obviously more convenient than that taken from the power grid - and as regards the supply of self-produced power to the grid, which is subject to increasingly stringent constraints and is increasingly less convenient, when not already burdensome, for individual users.

Document US2011175565 discloses a device according to the preamble of claim 1.

Therefore, an object of the present invention is the provision of an apparatus for the conversion and optimized management of power produced from renewable sources, and in particular from solar sources, for household use and not only, adapted to control the use of power in order to maximize the management cost-effectiveness whilst ensuring the MPPT (Maximum Power Point Tracking), i.e. maximizing the energy power collection by the photovoltaic generator.

Another object of the present invention is the provision of a photovoltaic system for the production of power comprising an apparatus for the conversion and optimized management of the use of power in the household environment and not only, adapted to control the use of the power produced so as to maximize the management cost-effectiveness.

Further objects, features and advantages of the present invention will become more apparent from the following detailed description, given by way of a nonlimiting example and shown in the accompanying figures, in which:

figure 1 shows a schematic block diagram of a preferred embodiment of the apparatus for the conversion and management of the power produced from renewable sources and adapted to be connected directly to the power grid, according to the present invention;

figure 2 shows the pattern of the typical power production of a photovoltaic generator during a day;

figure 3 shows the pattern of the typical power production of a photovoltaic generator during a day in relation to the limit imposed by some power grid providers, on the amount of self-produced power that can be supplied to the power grid;

figure 4 shows one of the preferred operating modes of the power conversion and management apparatus according to the present invention.

DETAILED DESCRIPTION OF THE INVENTION

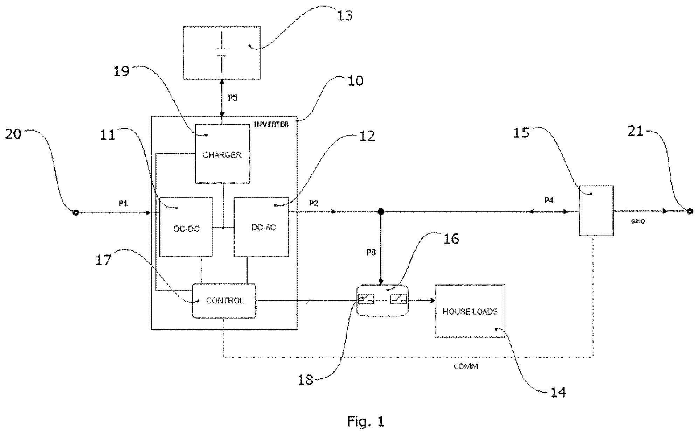

With reference to the accompanying figure 1, the apparatus according to the present invention comprises:

*input terminals 20* coupled to a DC voltage preferably coming from a generator of renewable power, for example based on photovoltaic or wind sources; *an inverter module 10* in turn comprising

a first DC-DC conversion stage 11, connected in input to said input terminals 20,
a second DC-AC conversion stage 12, having the input coupled to the output of said first DC-DC conversion stage 11 and the output connected to the power grid 21,
a battery-charger module 19 associated in input to the output of said first DC-DC conversion stage 11 and to the input of said second DC-AC conversion stage 12,
a control module 17 adapted to adjust the operation of said inverter module 10;

*a battery module 13* associated, through said battery-charger module 19, to the output of said first DC-DC conversion stage 11 and to the input of said second DC-AC conversion stage 12 according to a configuration commonly called "DC link system", said battery module 13 being adapted to store power from said first stage 11, during recharge, and to supply energy to said second stage 12 during discharge; *at least one house load 14* associated to the output of said second stage 12 and to the power grid 21; *power measurement means* adapted to measure the power in input and output to/from said inverter module 10 and the power absorbed by or supplied to grid 21; *a switching module 16* adapted to control the switching on or off of said at least one house load 14.

Said control module 17 is further associated to said power measurement means and to said switching module 16 and to a user interface, preferably comprising at least a display and a keyboard.

Said power measurement means preferably comprises a bidirectional meter device 15 of the AC power consumption connected between the output of said second stage 12 and the power grid 21, downstream of said at least one house load 14.

In further detail, said first DC-DC conversion stage 11 is adapted to convert the input direct voltage from a renewable source - such as a photovoltaic generator - in a direct voltage of different level and to adjust the load of the photovoltaic generator so as to optimize the operation thereof, for example, in the case of photovoltaic sources, by applying the known MPPT (Maximum Power Point Tracking) techniques.

Said second DC-AC conversion stage 12 is adapted to convert the direct voltage in output from said first stage 11 into an alternating voltage adapted to be supplied to grid 21 and to supply electrical loads such as household appliances and the like;
Said control module 17, in particular, by suitably interacting with said power meter means and with said switching module 16, is adapted to manage the use of the power produced from said renewable source so as to maximize the management *cost-effectiveness,* in particular by maximizing the so-called *self-consumption,* defined as the ratio between the amount of self-produced power or electrical energy that is consumed by the user in his home and the total amount of self-produced power or electrical energy, and the maximization of *self-sufficiency,* i.e. the ratio between the portion of power or electrical energy produced and used locally and the total amount of power or electrical energy consumed by the user in his home.

More generally, the control module 17 of the apparatus according to the present invention allows adjusting the operation of said inverter module 10 and of said switching module 16, so that the combination of the value of the input and output power to/from said inverter module 10 and of the value of the power absorbed by or supplied to grid 21, is approximately equal to a required value.

In this way, by acting on appropriate combinations of the various powers involved, each one optionally weighted by suitable and predefined multiplicative coefficients, for example having a value between 0 and 1, it is possible to adapt the operation of the apparatus according to the present invention to all the various conditions, optimizing the behavior thereof as a function of the result to be achieved such as cost-effectiveness, own consumption, energy self-sufficiency, etc.

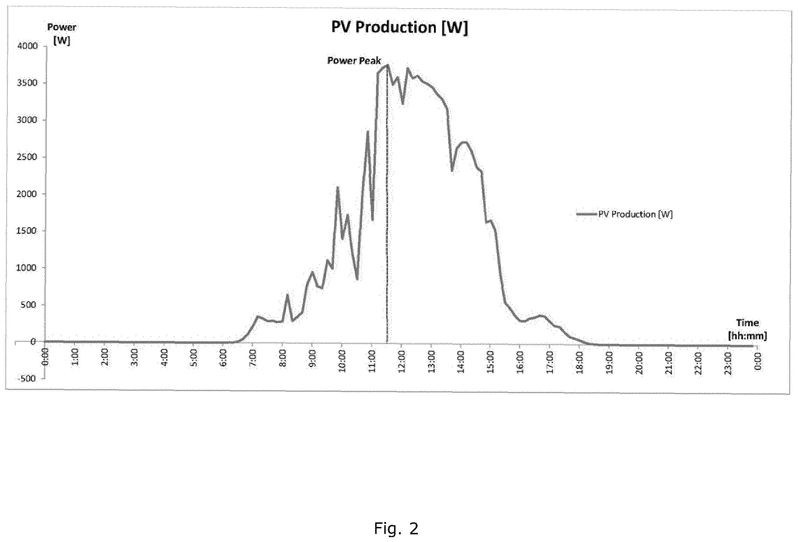

Considering, for example, a renewable energy source consisting of a photovoltaic generator, the graph shown in the accompanying figure 2 represents the production of said photovoltaic generator in a typical day. The vertical line indicates approximately the energy production peak time.

With reference to the inverter module 10 described, in one of the selectable operating modes we have that before the time in which there is the greatest power production it is preferable to fully utilize the power contained in said group of batteries 13 to meet the demand of said at least one house load 14. In fact, in the next hours, a considerable amount of power produced by said photovoltaic generator will still be available to fully charge the battery so as to meet the evening consumption peak of said at least one house load 14.

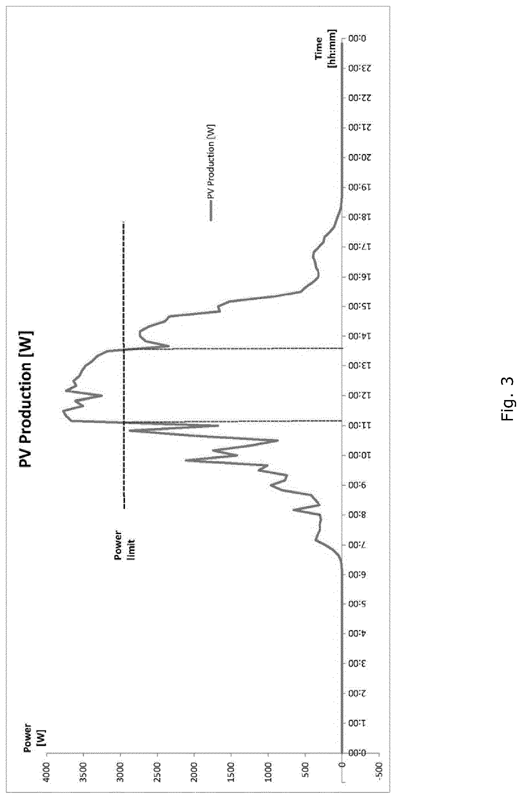

The graph shown in the accompanying figure 3 still represents the production of said photovoltaic generator in a typical day, in relation to the limit, often imposed by grid 21 providers and represented by the horizontal line, on the amount of self-produced power that can be supplied to the grid freely or at least without incurring reductions of the incentive rate or even sanctions.

The leftmost vertical line indicates the time at which the above limit is exceeded. Before reaching the above limit time, therefore, it is preferable to fully use the energy contained in said group of batteries 13 to meet the demand of said at least one house load 14. The objective therefore is to reach the time when the production limit is exceeded with the group of batteries 13 containing the minimum possible amount of power so as to be able to absorb the excess of self-produced power by recharging said group of batteries 13.

In the latter case, said group of batteries 13 is thus used as *power buffer* able to optimize the self-produced power management both for the loads to be supplied and for the provider's requirements governing and restricting the supply of self-produced power to the grid.

To further optimize the management of self-produced power, said switching module 16 connects or disconnects the output of said second stage 12 with said at least one house load 14 so as to maximize the management *cost-effectiveness,* in particular by maximizing the so-called *self-consumption,* defined as the ratio between the amount of self-produced power that is consumed by the user in his home and the total amount of self-produced power, and the maximization of *self-sufficiency,* i.e. the ratio between the portion of power produced and used locally and the total amount of power consumed by the user in his home.

In a preferred embodiment of the present invention, said switching module 16 includes at least one controlled switch 18 adapted to stop or enable the supply of power to said at least one house load 14.

In another preferred embodiment of the present invention, said switching module 16 may be implemented through any communication line, either wired or wireless, able to drive the switching on or off of house loads provided with a suitable communication interface (so-called *smart appliances).*

With reference to the accompanying figure 1, we can see power P1 produced by the photovoltaic generator, power P2 in output from said second stage 12, power P3 which supplies said at least one house load 14, the bidirectional power P4 which flows from (in this case indicated as P4-) and to (in this case indicated as P4+) said bidirectional meter device 15 and power P5 - bidirectional too - which flows from (in this case indicated as P5+) and to (in this case indicated as P5-) said group of batteries 13 during the discharge and recharge steps, respectively. Power P2 generated by the inverter module 10 is a function of both the renewable power available P1 (maximized, for example, through an MPPT algorithm implemented by said control module 17) and of power P5 that can be supplied or absorbed by the battery.

In fact, said control module 17 reads the bidirectional meter device 15 and receives information about the amount of power P4 exchanged with the grid. At this point, said control module 17 adjusts the operation of said inverter module 10 so as to keep power P4, exchanged with the grid, at a threshold set by the user by varying the contribution of power P5 exchanged with said group of batteries 13.

In addition, said control module 17 controls said switching module 16 so as to switch on or off a house load (boiler, heater, etc.). The control module 17 therefore acts so as to also vary the household consumptions P3 according to the needs, based on the user's settings and on the value of instant powers P1, P2, P5 and P4 measured.

For example, said control module 17 can operate so as to maximize the self-consumption, as defined above, in addition to the renewable power available P1, through, for example, the use of a suitable MPPT algorithm. The amount of self-produced power that is consumed by the user within his home is therefore equal to the self-produced power (equal to the product of the self-produced power P2 by time t) decreased of the power supplied to grid 21 (equal to the product of power P4+ flowing to said bidirectional meter device 15 by time t).

Therefore, in general terms, the aim is to maximize the following ratio:

$$[(P2)*t - (P4+)*t]/P2*t.$$

To do so, said control module 17 can operate so as to drive said switching module 16 according to the following modes:

a) The adjustment of said inverter module 10 and the switching on of said switching module 16, and thus the closure of one or more switches 18 belonging to it, are dependent on the achievement, by the self-produced power P4+ which is supplied to grid 21 and is detected by said bidirectional meter device 15, of a threshold $(P4+)_{th}$. In practice, when the amount of self-produced power which is supplied to the grid P4+ becomes too large and is likely to become an undesired excess for the provider or the user, one or more of said at least one house load 14 is activated so as to use this excess for household appliances connected to said inverter module 10. In this case, self-consumption is maximized by keeping the ratio [(P2)*t - (P4+)*t]/P2*t high and exceeding the limits imposed by the provider on the amount of self-produced power supplied to the grid is prevented as well. If the activation of one or more of said at least one house loads 14 is not sufficient to fall within the limits desired, in this operating mode it is possible to further limit the power generated by said inverter of said second stage 12.

b) The adjustment of said inverter module 10 and the activation of said switching module 16, and thus the closure of one or more of the switches belonging to it, are dependent on the achievement of a threshold for the level of self-produced power P4+ that is supplied to grid 21. In practice, when the amount of self-produced power that is supplied to grid P4+ becomes too large and exceeds a certain activation threshold, the amount of power P5- which is used is increased to charge said group of batteries 13 and/or one or more of said at least one house loads 14 is activated. The goal, in this case, is both to prevent exceeding the limits set by the provider on the amount of self-produced power and supplied to the grid and to maximize self-consumption by assigning a priority to the house loads 14 in relation to the battery charge while always maximizing the available renewable power P1 through, for example, the use of a suitable algorithm MPPT. Since loads 14 are priority, in order to meet the requirements of a load the battery charge may be interrupted and it may also be set to discharge. If the activation of one or more of said at least one house loads 14 is not sufficient to fall within the limits desired and the limit of self-produced power P4+ that is supplied to the grid imposed by the grid provider is still exceeded, in this operating mode it is possible to limit power P2 generated by said inverter of said second stage 12.

c) The activation of said switching module 16, and thus the closure of one or more of the switches belonging to it, are dependent on the achievement of a threshold for the level of power P2 supplied by said second stage 12. In practice, when the amount of power supplied by the inverter of said second stage 12 becomes too large and exceeds the activation threshold, one or more of said at least one house loads 14 is activated. In this case, it is not necessary to use said bidirectional meter device 15, since power P2 is read directly by the inverter of said second stage 12 and having to reduce power P2 as in previous case b) is also prevented.

d) The adjustment of said inverter module 10 and the activation of said switching module 16, and thus the closure of one or more of the switches belonging to it, take place in such a way as to give higher priority to the discharge of said battery module 13 (for example using the power contained therein for supplying said at least one house load 14 and/or to send it, converted into AC, to grid 21) in a first time window and then give, in a second time window, higher priority to the charging of said battery module 13. In this way, it is ensured that said battery module 13 contains the least possible amount of power at the end of said first time window, making itself available to accumulate a possible excess of power provided in input to said inverter module 10 in successive time windows.

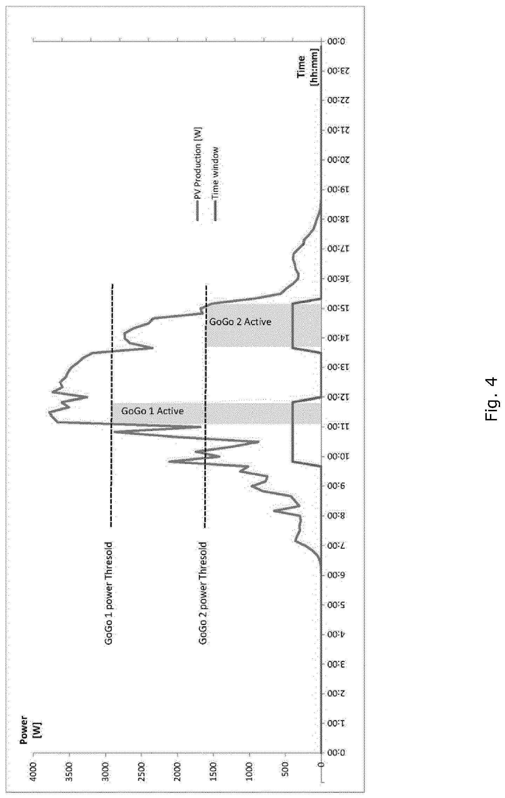

e) As shown in the accompanying figure 4, said switching module 16 is associated with a plurality of time windows within which a different activation threshold is evaluated, relative to a different control parameter. In this way, said activation threshold may be related to the self-produced power P4+ that is supplied to grid 21, to the sum of the self-produced power supplied to the grid and of the battery charge power $(P4+) + (|P5-|)$, or to the photovoltaic power P1 generated.

Other operating modes may be programmed and selected by the user by acting on said control module 17 through the respective user interface, preferably comprising at least a display and a keyboard.

It is also clear that the operating modes described, based on the reading, calculation and setting of power values, may of course be extended to similar operating modes not based on the power value but on the electrical energy power, simply by introducing a suitable reference time interval since energy, as known, is equal to power multiplied by time.

## Claims

1. An apparatus for the conversion and management of power comprising:

   input terminals (20) coupled to an input DC voltage;
   an inverter module (10) comprising a first DC-DC conversion stage (11), connected in input to said input terminals (20), a second DC-AC conversion stage (12) having the input coupled to the output of said first DC-DC conversion stage (11) and the output connected to the power grid (21), a battery-charger module (19) associated in input to the output of the first DC-DC conversion stage (11) and to the input of said second DC-AC 12 conversion stage, and a control module (17) adapted to adjust the operation of said inverter module (10);
   a battery module (13) coupled to the output of said battery-charger module (19), said battery module (13) being adapted to store power from said first DC-DC conversion stage (11), during recharge, and to supply power to said second DC-AC (12) conversion stage during discharge;
   at least one house load (14) associated to the output of said second stage (12) and to the grid (21);
   power meter means adapted to measure the power in input and in output to/from said inverter module (10) and the power absorbed by or supplied to the grid (21);
   a switching module (16) associated to said at least one house load (14) and
   adapted to control the switching on and off of said at least one house load (14);
   **characterized in that**
   said control module (17) is further associated to said power meter means and to said switching module (16) and is adapted to adjust the operation of said inverter module (10) and of said switching module (16) in order to keep the power (P4) exchanged with the grid below a threshold set by the user by varying the amount of power (P5) exchanged with said group of batteries (13) and the amount of power (P3) absorbed by said at least one house load (14).

2. An apparatus according to claim 1, **characterized in that** said control module (17) is adapted to adjust the operation of said inverter module (10) and of said switching module (16) according to an operating mode adapted to maximize the ratio between the fraction of self-produced power (P1) which is absorbed by said at least one house load (14), and the total self-produced power (P1).

3. An apparatus according to one or more of the preceding claims, **characterized in that** said control module (17) is adapted to adjust the operation of said inverter module (10) and of said switching module (16) according to an operating mode adapted to maximize the ratio between the fraction of the self-produced power (P1), which is absorbed by said at least one house load (14), and the total power (P3) absorbed by said at least one house load (14).

4. An apparatus according to one or more of the preceding claims, **characterized in that** said control module (17) is adapted to adjust the operation of said inverter module (10) and of said switching module (16) according to an operating mode adapted to limit the fraction (P4+) of the output power from said second stage (12), which is supplied to the power grid (21), by increasing the power (P3) absorbed by said at least one house load (14).

5. An apparatus according to one or more of the preceding claims, **characterized in that** said control module (17) is adapted to adjust the operation of said inverter module (10) and of said switching module (16) according to an operating mode adapted to limit the power (P4+) which is fed to the grid (21) by increasing the output power (P5-) from said battery-charger module (19).

6. An apparatus according to one or more of the preceding claims, **characterized in that** said control module (17) is adapted to adjust the operation of said inverter module (10) and of said switching module (16) according to an operating mode adapted to give priority to the discharging of said battery module (13) in a first time window and to give priority to the charging of said battery module (13) in a second time window.

7. An apparatus according to one or more of the preceding claims, **characterized in that** said control module (17) is adapted to define a plurality of time windows, within the same day, on which different operating modes are applied.

8. An apparatus according to one or more of the preceding claims, **characterized in that** said control module (17) comprises a user interface comprising at least a display and a keyboard.

9. An apparatus according to one or more of the preceding claims, **characterized in that** said switching module (16) comprises at least a controlled switch (18) adapted to interrupt or enable the supply of power to said at least one house load (14).

10. An apparatus according to one or more of the preceding claims, **characterized in that** said switching module (16) comprises a communication interface, wired or wireless, adapted to drive the switching on or off of said at least one house load (14), said at least one house load (14) being provided with communication means compatible with said communication interface.

11. An apparatus according to one or more of the preceding claims, **characterized in that** said DC input voltage coupled to said input terminals (20) is produced by a generator of renewable power based on photovoltaic sources.

12. An apparatus according to claim 11, **characterized in that** said first DC-DC conversion stage (11) is adapted to adjust the load of the generator of renewable power based on photovoltaic sources by applying an MPPT algorithm.

13. A photovoltaic apparatus for the production and supply of single-phase or three-phase alternating power to a public grid (21) or a house load (14) comprising: at least one photovoltaic panel comprising an electrical output, adapted to be exposed to the solar radiation for receiving solar energy and adapted to produce direct voltage and power starting from said solar energy; an apparatus for the conversion and management of power comprising input terminals (20) connected to the electrical output of said photovoltaic panel and an electrical output, said apparatus for the conversion and management of power being adapted to convert said direct voltage and power into single-phase or three-phase alternating voltage and power and supply it, through said electrical output, for use by a public grid (21) or a house load (14) connected to said electrical output, wherein said apparatus for the conversion and management of power is of the type according to one or more of claims 1 to 12.

**Patentansprüche**

1. Vorrichtung zur Umwandlung und Verwaltung von Strom, umfassend:

Eingangsklemmen (20), die mit einer Eingangsgleichspannung gekoppelt sind; ein Wechselrichtermodul (10), umfassend eine erste Gleichstrom-Gleichstrom-Wandlerstufe (11), die eingangsseitig mit den Eingangsklemmen (20) verbunden ist, eine zweite Gleichstrom-Wechselstrom-Wandlerstufe (12), deren Eingang mit dem Ausgang der ersten Gleichstrom-Gleichstrom-Wandlerstufe (11) gekoppelt ist und deren Ausgang mit dem Stromnetz (21) verbunden ist, ein Batterielademodul (19), das eingangsseitig mit dem Ausgang der ersten Gleichstrom-Gleichstrom-Wandlerstufe (11) und dem Eingang der zweiten Gleichstrom-Wechselstrom-Wandlerstufe (12) verbunden ist, und ein Steuermodul (17), das dazu ausgebildet ist, den Betrieb des Wechselrichtermoduls (10) zu steuern;

ein Batteriemodul (13), das mit dem Ausgang des Batterielademoduls (19) gekoppelt ist, wobei das Batteriemodul (13) dazu ausgebildet ist, während des Aufladens Strom von der ersten Gleichstrom-Gleichstrom-Wandlerstufe (11) zu speichern und während des Entladens Strom an die zweite Gleichstrom-Wechselstrom-Wandlerstufe (12) zu liefern;

mindestens eine Hauslast (14), die mit dem Ausgang der zweiten Stufe (12) und mit dem Netz (21) verbunden ist;

Mittel zur Strommessung, die dazu ausgebildet sind, den Eingangs- und Ausgangsstrom des Wechselrichtermoduls (10) und den vom Netz (21) aufgenommenen oder in dieses eingespeisten Strom zu messen;

ein Schaltmodul (16), das mit der mindestens einen Hauslast (14) verbunden ist und dazu ausgebildet, das Ein- und Ausschalten der mindestens einen Hauslast (14) zu steuern;

**dadurch gekennzeichnet, dass**

das Steuermodul (17) ferner mit den Mitteln zur Strommessung und dem Schaltmodul (16) verbunden ist und dazu ausgebildet ist, den Betrieb des Wechselrichtermoduls (10) und des Schaltmoduls (16) einzustellen, um den mit dem Netz ausgetauschten Strom (P4) unter einem vom Benutzer eingestellten Schwellenwert zu halten, indem die mit der Batteriegruppe (13) ausgetauschte Strommenge (P5) und die von der mindestens einen Hauslast (14) aufgenommene Strommenge (P3) variiert werden.

2. Vorrichtung nach Anspruch 1, **dadurch gekennzeichnet, dass** das Steuermodul (17) dazu ausgebildet ist, den Betrieb des Wechselrichtermoduls (10) und des Schaltmoduls (16) gemäß einem Betriebsmodus einzustellen, der geeignet ist, das Verhältnis zwischen dem Anteil des selbsterzeugten Stroms (P1), der von der mindestens einen Hauslast (14) aufgenommen wird, und des gesamten selbsterzeugten Stroms (P1) zu maximieren.

3. Vorrichtung nach einem oder mehreren der vorstehenden Ansprüche, **dadurch gekennzeichnet, dass** das Steuermodul (17) dazu ausgebildet ist, den Betrieb des Wechselrichtermoduls (10) und des Schaltmoduls (16) gemäß einem Betriebsmodus einzustellen, der dazu ausgebildet ist, das Verhältnis zwischen dem Anteil des selbsterzeugten Stroms (P1), der von der mindestens einen Hauslast (14) aufgenommen wird, und des von der mindestens einen Hauslast (14) aufgenommenen Gesamtstroms (P3) zu maximieren.

4. Vorrichtung nach einem oder mehreren der vorstehenden Ansprüche, **dadurch gekennzeichnet, dass** das Steuermodul (17) dazu ausgebildet ist, den Betrieb des Wechselrichtermoduls (10) und des Schaltmoduls (16) gemäß einem Betriebsmodus einzustellen, der geeignet ist, den Anteil (P4+) des Ausgangsstroms der zweiten Stufe (12), der in das Stromnetz (21) eingespeist wird, zu begrenzen, indem der von der mindestens einen Hauslast (14) aufgenommene Strom (P3) erhöht wird.

5. Vorrichtung nach einem oder mehreren der vorstehenden Ansprüche, **dadurch gekennzeichnet, dass** das Steuermodul (17) dazu ausgebildet ist, den Betrieb des Wechselrichtermoduls (10) und des Schaltmoduls (16) gemäß einem Betriebsmodus einzustellen, der geeignet ist, den in das Netz (21) eingespeisten Strom (P4+) durch Erhöhung des Ausgangsstroms (P5-) des Batterielademoduls (19) zu begrenzen.

6. Vorrichtung nach einem oder mehreren der vorstehenden Ansprüche, **dadurch gekennzeichnet, dass** das Steuermodul (17) dazu ausgebildet ist, den Betrieb des Wechselrichtermoduls (10) und des Schaltmoduls (16) gemäß einem Betriebsmodus einzustellen, der geeignet ist, dem Entladen des Batteriemoduls (13) in einem ersten Zeitfenster Vorrang zu geben und dem Laden des Batteriemoduls (13) in einem zweiten Zeitfenster Vorrang zu geben.

7. Vorrichtung nach einem oder mehreren der vorstehenden Ansprüche, **dadurch gekennzeichnet, dass** das Steuermodul (17) dazu ausgebildet ist, eine Vielzahl von Zeitfenstern innerhalb desselben Tages zu definieren, auf die unterschiedliche Betriebsarten angewendet werden.

8. Vorrichtung nach einem oder mehreren der vorstehenden Ansprüche, **dadurch gekennzeichnet, dass** das Steuermodul (17) eine Benutzerschnittstelle mit mindestens einer Anzeige und einer Tastatur umfasst.

9. Vorrichtung nach einem oder mehreren der vorstehenden Ansprüche, **dadurch gekennzeichnet, dass** das Schaltmodul (16) mindestens einen gesteuerten Schalter (18) umfasst, der dazu ausgebildet ist, die Stromzufuhr zu der mindestens einen Hauslast (14) zu unterbrechen oder zu ermöglichen.

10. Vorrichtung nach einem oder mehreren der vorstehenden Ansprüche, **dadurch gekennzeichnet, dass** das Schaltmodul (16) eine verdrahtete oder drahtlose Kommunikationsschnittstelle umfasst, die dazu ausgebildet ist, das Ein- oder Ausschalten der mindestens einen Hauslast (14) zu steuern, wobei die mindestens eine Hauslast (14) mit Kommunikationsmitteln versehen ist, die mit der Kommunikationsschnittstelle kompatibel sind.

11. Vorrichtung nach einem oder mehreren der vorstehenden Ansprüche, **dadurch gekennzeichnet, dass** die an die Eingangsklemmen (20) gekoppelte Gleichstrom-Eingangsspannung von einem Generator für erneuerbare Energie auf der Grundlage photovoltaischer Quellen erzeugt wird.

12. Vorrichtung nach Anspruch 11, **dadurch gekennzeichnet, dass** die erste Gleichstrom-Gleichstrom-Wandlerstufe (11) dazu ausgebildet ist, die Last des Generators für erneuerbare Energie auf der Grundlage photovoltaischer Quellen durch Anwendung eines MPPT-Algorithmus anzupassen.

13. Photovoltaische Vorrichtung zur Erzeugung und Einspeisung von einphasigem oder dreiphasigem Wechselstrom in ein öffentliches Netz (21) oder eine Hauslast (14), umfassend: mindestens ein photovoltaisches Paneel mit einem elektrischen Ausgang, das dazu ausgebildet ist, der Sonneneinstrahlung ausgesetzt zu werden, um Sonnenenergie zu empfangen, und das dazu ausgebildet ist, ausgehend von der Sonnenenergie Gleichspannung und Strom zu erzeugen; eine Vorrichtung für die Umwandlung und Verwaltung von Strom, umfassend Eingangsklemmen (20), die mit dem elektrischen Ausgang des photovoltaischen Paneels verbunden sind, und einen elektrischen Ausgang, wobei die Vorrichtung für die Umwandlung und die Verwaltung von Strom dazu ausgebildet ist, die Gleichspannung und den Strom in einphasige oder dreiphasige Wechselspannung und Strom umzuwandeln und diese über den elektrischen Ausgang zur Verwendung durch ein öffentliches Netz (21) oder eine Hauslast (14), die mit dem elektrischen Ausgang gekoppelt ist, bereitzustellen, wobei die Vorrichtung für die Umwandlung und die Verwaltung von Strom vom Typ gemäß einem oder mehreren der Ansprüche 1 bis 12 ist.

**Revendications**

1. Appareil pour la conversion et la gestion d'énergie comprenant :

    des bornes d'entrée (20) couplées à une tension CC d'entrée ;
    un module onduleur (10) comprenant un premier étage de conversion CC-CC (11), connecté en entrée auxdites bornes d'entrée (20), un deuxième étage de conversion CC-CA (12) ayant l'entrée couplée à la sortie dudit premier étage de conversion CC-CC (11) et la sortie connectée au réseau électrique (21), un module chargeur de batterie (19) associé en entrée à la sortie du premier étage de conversion CC-CC (11) et à l'entrée dudit deuxième étage de conversion CC-CA 12, et un module de commande (17) adapté pour régler le fonctionnement dudit module onduleur (10) ;
    un module de batterie (13) couplé à la sortie dudit module de chargeur de batterie (19), ledit module de batterie (13) étant adapté pour stocker l'énergie provenant dudit premier étage de conversion CC-CC (11), pendant la recharge, et pour fournir de l'énergie audit second étage de conversion CC-CA (12) pendant la décharge ;
    au moins une charge domestique (14) associée à la sortie dudit deuxième étage (12) et au réseau (21) ;
    des moyens de mesure d'énergie adaptés pour mesurer l'énergie en entrée et en sortie vers/depuis ledit module onduleur (10) et l'énergie absorbée par ou fournie au réseau (21) ;
    un module de commutation (16) associé à ladite au moins une charge domestique (14) et adapté pour commander l'allumage ou l'extinction de ladite au moins une charge domestique (14) ;
    **caractérisé en ce que**
    ledit module de commande (17) est en outre associé auxdits moyens de mesure d'énergie et audit module de commutation (16) et est adapté pour ajuster le fonctionnement dudit module onduleur (10) et dudit module de commutation (16) afin de maintenir l'énergie (P4) échangée avec le réseau en dessous d'un seuil fixé par l'utilisateur en faisant varier la quantité d'énergie (P5) échangée avec ledit groupe de batteries (13) et la quantité d'énergie (P3) absorbée par ladite au moins une charge domestique (14).

2. Appareil selon la revendication 1, **caractérisé en ce que** ledit module de commande (17) est adapté pour ajuster le fonctionnement dudit module onduleur (10) et dudit module de commutation (16) selon un mode de fonctionnement adapté pour maximiser le rapport entre la fraction d'énergie autoproduite (P1) qui est absorbée par ladite au moins une charge domestique (14), et l'énergie autoproduite totale (P1).

3. Appareil selon l'une ou plusieurs des revendications précédentes, **caractérisé en ce que** ledit module de commande (17) est adapté pour ajuster le fonctionnement dudit module onduleur (10) et dudit module de commutation (16) selon un mode de fonctionnement adapté pour maximiser le rapport entre la fraction de l'énergie autoproduite (P1), qui est absorbée par ladite au moins une charge domestique (14), et l'énergie totale (P3) absorbée par ladite au moins une charge domestique (14).

4. Appareil selon l'une ou plusieurs des revendications précédentes, **caractérisé en ce que** ledit module de commande (17) est adapté pour ajuster le fonctionnement dudit module onduleur (10) et dudit module de commutation (16) selon un mode de fonctionnement adapté pour limiter la fraction (P4+) de l'énergie de sortie dudit deuxième étage (12), qui est fournie au réseau électrique (21), en augmentant l'énergie (P3) absorbée par ladite au moins une charge domestique (14).

5. Appareil selon l'une ou plusieurs des revendications précédentes, **caractérisé en ce que** ledit module de commande (17) est adapté pour ajuster le fonctionnement dudit module onduleur (10) et dudit module de commutation (16) selon un mode de fonctionnement adapté pour limiter l'énergie (P4+) qui est alimentée au réseau (21) en augmentant l'énergie de sortie (P5-) dudit module chargeur de batterie (19).

6. Appareil selon l'une ou plusieurs des revendications précédentes, **caractérisé en ce que** ledit module de commande (17) est adapté pour ajuster le fonctionnement dudit module onduleur (10) et dudit module de commutation (16) selon un mode de fonctionnement adapté pour donner la priorité à la décharge dudit module de batterie (13) dans une première fenêtre temporelle et pour donner la priorité à la charge dudit module de batterie (13) dans une deuxième fenêtre temporelle.

7. Appareil selon l'une ou plusieurs des revendications précédentes, **caractérisé en ce que** ledit module de commande (17) est adapté pour définir une pluralité de fenêtres temporelles, au cours d'une même journée, auxquelles différents modes de fonctionnement sont appliqués.

8. Appareil selon l'une ou plusieurs des revendications précédentes, **caractérisé en ce que** ledit module de commande (17) comprend une interface utilisateur comprenant au moins un écran et un clavier.

9. Appareil selon l'une ou plusieurs des revendications précédentes, **caractérisé en ce que** ledit module de commutation (16) comprend au moins un interrupteur commandé (18) adapté pour interrompre ou permettre l'alimentation en énergie de ladite au moins une charge domestique (14).

10. Appareil selon l'une ou plusieurs des revendications précédentes, **caractérisé en ce que** ledit module de commutation (16) comprend une interface de communication, câblée ou sans fil, adaptée pour entraîner l'allumage ou l'extinction de ladite au moins une charge domestique (14), ladite au moins une charge domestique (14) étant pourvue de moyens de communication compatibles avec ladite interface de communication.

11. Appareil selon l'une ou plusieurs des revendications précédentes, **caractérisé en ce que** ladite tension d'entrée CC couplée auxdites bornes d'entrée (20) est produite par un générateur d'énergie renouvelable basé sur des sources photovoltaïques.

12. Appareil selon la revendication 11, **caractérisé en ce que** ledit premier étage de conversion CC-CC (11) est adapté pour ajuster la charge du générateur d'énergie renouvelable basé sur des sources photovoltaïques en appliquant un algorithme MPPT.

13. Appareil photovoltaïque pour la production et la fourniture d'énergie alternative monophasée ou triphasée à un réseau public (21) ou à une charge domestique (14), comprenant : au moins un panneau photovoltaïque comprenant une sortie électrique, adapté pour être exposé au rayonnement solaire pour recevoir de l'énergie solaire et adapté pour produire une tension et une énergie continues à partir de ladite énergie solaire ; un appareil pour la conversion et la gestion d'énergie comprenant des bornes d'entrée (20) connectées à la sortie électrique dudit panneau photovoltaïque et une sortie électrique, ledit appareil pour la conversion et la gestion d'énergie étant adapté pour convertir lesdites tension et énergie continues en une tension et une énergie alternatives monophasées ou triphasées et les fournir, à travers ladite sortie électrique, pour une utilisation par un réseau public (21) ou une charge domestique (14) connectés à ladite sortie électrique, dans lequel ledit appareil pour la conversion et la gestion d'énergie est du type selon l'une ou plusieurs des revendications 1 à 12.

Fig. 1

Fig. 2

Fig. 3

Fig. 4

**EP 3 029 797 B1**

**Patent documents cited in the description**

- US 2011175565 A